# EUROPÄISCHE PATENTSCHRIFT

(11) **EP 3 079 862 B1**
(45) Veröffentlichungstag und Bekanntmachung des Hinweises auf die Patenterteilung: **14.02.2018**
(21) Anmeldenummer: 14837063.8
(22) Anmeldetag: 11.12.2014
(51) Int. Cl.: B25J 15/02

(54) **ANTRIEBSVORRICHTUNG FÜR EINE GREIFVORRICHTUNG**
DRIVE DEVICE FOR A GRIPPING DEVICE
DISPOSITIF D'ENTRAÎNEMENT POUR UN DISPOSITIF DE PRÉHENSION

(30) Priorität: 11.12.2013 DE 102013020490
(43) Veröffentlichungstag der Anmeldung: 19.10.2016
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2014/000629
(87) Internationale Veröffentlichungsnummer: WO 2015/085987

(56) Entgegenhaltungen:
- JP-A- 2005 161 454
- JP-U- S61 120 492
- US-A1- 2002 158 426
- US-B1- 6 777 903

## Beschreibung

Die Erfindung betrifft eine Antriebsvorrichtung für eine Greifvorrichtung, bei der in einem Gehäuse mindestens ein Elektromotor und mehrere Getriebe angeordnet sind, wobei das Abtriebsglied des Elektromotors auf einen die Greifelemente anlenkenden Hubschlitten wirkt, wobei die Mittellinie des Elektromotors parallel oder koaxial zur Mittellinie des Hubschlittens orientiert ist und wobei zwischen den Greifelementen und dem Abtriebsglied des Elektromotors mindestens ein Federelement angeordnet ist.

Aus der DE 100 48 673 B4 ist eine Parallelgreifvorrichtung mit zwei auf Horizontalschlitten angeordneten Greifelementen bekannt. Bei diesem Gegenstand weisen die Horizontalschlitten einander zugewandte Zahnstangenabschnitte auf. Letztere kämmen mit einem zwischen den Horizontalschlitten sitzenden elektromotorisch angetriebenen Stirnrad. In einer weiteren Variante werden die Horizontalschlitten mittels eines Hubschlittens über Kniehebel angelenkt. Der Hubschlitten ragt aus einer Gleithülse heraus, in deren rückwärtigen Ende sich eine Gewindemutter befindet, in die eine schrittmotorisch angetriebene Gewindespindel eingreift. In der Hülse ist eine Druckfeder angeordnet, die zum Abpuffern des Überdrehens des antreibenden Schrittmotors den Hubschlitten gegen die Gewindemutter drückt.

Die US 6 777 903 B1 beschreibt eine Greifvorrichtung, bei der ein elektromotorisch angetriebener Schiebekeil die Greifelemente der Greifvorrichtung zum Lösen vom Werkstück auseinander drückt. Dazu ist am Elektromotor eine rotierbare Spindel angeordnet, die auf eine Mutter wirkt. Zwischen der Mutter und dem Schiebekeil ist eine Druckfeder angeordnet.

Aus der US 2002/158426 A1 ist eine Greifvorrichtung bekannt, in der zwei Greifbacken mittels eines Doppelschiebekeils auf- und zubelegbar sind. Im Doppelschiebekeil ist eine Gewindespindel befestigt, auf der ein Schneckenrad aufgeschraubt ist.

Das Schneckenrad kämpft mit einer antreibenden Schnecke.

Die JP 2005 161 454 A beschreibt eine Greifvorrichtung, bei der zwei Greifbacken über Kniehebel angelenkt werden, die von einem Hubschlitten angetrieben werden. Im Hubschlitten ist eine Mutter integriert, in die die Spindel eines Schraubgetriebes eingreift. Die Spindel ist am Steg eines Planetengetriebes befestigt, dessen antreibendes Sonnenrad auf der Welle eines Elektromotors sitzt.

Der vorliegenden Erfindung liegt die Problemstellung zugrunde, eine Parallelgreifvorrichtung zu entwickeln, die bei großer Klemmkraft, geringem Bauraumbedarf und einer langen Lebensdauer ohne Druckluftantrieb eine hohe Dynamik aufweist.

Diese Problemstellung wird mit den Merkmalen des Hauptanspruchs gelöst. Dazu sind zwischen dem Elektromotor und den Greifelementen mindestens drei Getriebe angeordnet. Ein erstes Getriebe ist ein Rädergetriebe mit gerad- oder schägverzahnten Rädern. Das Rädergetriebe ist ein Planetengetriebe, bei dem das Sonnenrad auf der Welle des Elektromotors sitzt, der Steg die Spindelmutter lagert und das Hohlrad ortsfest im - die Getriebe zumindest teilweise umgebenden - Gehäuse angeordnet ist. Ein zweites Getriebe ist ein Schraubgetriebe, dessen angetriebenes Getriebeglied eine Spindelmutter oder eine Gewindespindel ist und dessen abtreibendes Getriebeglied der Hubschlitten ist. Zwischen dem Abtriebsglied des Elektromotors und dem Hubschlitten ist mindestens ein elastisch abgefedertes Bauteil angeordnet, das bei einem Weiterdrehen mindestens eines Getriebeteils nach dem Abschalten des Elektromotors den dadurch erzeugten Hub aufbraucht.

Der für eine Greifvorrichtung vorgesehene Antrieb umfasst hier mindestens drei hintereinander geschaltete Getriebe. Das erste Getriebe, z.B. ein evolventenverzahntes Planeten- oder Stirnradgetriebe, wird von einem hochdynamischen bürstenlosen Gleichstrommotor angetrieben. Seine Welle treibt z.B. das erste Getriebe direkt an. Der Getriebeausgang des ersten Getriebes ist zugleich der Getriebeeingang des zweiten Getriebes, das hier ein Schraubgetriebe ist, dessen Getriebeausgang zugleich einen Hubschlitten darstellt. Dem Schraubgetriebe nachgeschaltet ist im Ausführungsbeispiel ein Doppelschiebekeilgetriebe, in dem die Hubbewegung des Hubschlittens in eine z.B. um 90 Winkelgrade gekippte Greif- und Lösebewegung umgelenkt wird. Für den Fall, dass der Keilwinkel des Doppelschiebekeilgetriebes ungleich 45 Winkelgrade ist, findet neben der Richtungsumlenkung auch eine Über- oder Untersetzung statt. Anstelle des Doppel- bzw. Mehrfachschiebekeilgetriebes können auch Hebelgetriebe, Kulissengetriebe, Exzentergetriebe und dergleichen verwendet werden. Auch Getriebekombinationen sind möglich.

Im Übrigen ist die Anzahl der Greifbacken bzw. der Schlitten nicht auf zwei beschränkt.

Die im Antrieb verwendeten Gleichstommotoren fahren sowohl bei der Greif- als auch bei der Lösebewegung jeweils gegen einen mechanischen Anschlag. Bei der Greifbewegung ist es das Werkstück, während es bei der Lösebewegung z.B. die Schlittenführungsanschläge sind. Da die Massenträgheit der rotierenden Motor- und Getriebeteile nach dem Abschalten des Motorstroms ein kurzzeitiges Weiterrotieren der Antriebsteile bewirkt, wird im Antrieb mindestens ein elastisch nachgiebiges Bauteil eingebaut. Wenn beispielsweise das auf der Motorwelle sitzende Abtriebsritzel auf ein großes Stirnrad wirkt, in dessen hohler Welle ein Innengewinde eingearbeitet ist, in das wiederum eine Gewindespindel als Hubschlitten zum Verschieben eines Doppelschiebekeils eingreift, so kann das Stirnrad axial über mechanische Federn im Gehäuse abgestützt werden.

Auch ist es möglich, z.B. am oberen Ende einer langen hohlen Motorwelle ein Ritzel zu lagern, das von einer Torsionsfeder, z.B. einem Drehstab, angelenkt ist, die die Motorwelle durchquert und am unteren Ende derselben drehfest arretiert ist.

Diese elastische Nachgiebigkeit im Antrieb, die also zwischen dem Motor und den die Greifelemente tragenden Schlitten angeordnet ist, ermöglicht es, schnelllaufende Elektromotoren zu benutzen, die laststromüberwacht auf einen Anschlag gefahren werden können.

Weitere Einzelheiten der Erfindung ergeben sich aus den Unteransprüchen und der nachfolgenden Beschreibung schematisch dargestellter Ausführungsformen.
- Figur 1:: Perspektivische Ansicht eines Parallelgreifers;
- Figur 2:: Teillängsschnitt durch das Doppelkeilgetriebe des Parallelgreifers nach Figur 1, jedoch mit Greifbacken. Der rechte Greifbacken ist geöffnet;
- Figur 3:: Perspektivische Ansicht des Führungsgrundkörpers des Parallelgreifers nach Figur 1;
- Figur 4:: Perspektivische Ansicht des Antriebsgrundkörpers des Parallelgreifers nach Figur 1;
- Figur 5:: Schnitt durch den Parallelgreifer;
- Figur 6:: Querschnitt durch das Planetengetriebe des Parallelgreifers in Höhe der Planeten;
- Figur 7:: Querschnitt durch das Planetengetriebe des Parallelgreifers in Höhe der Spindelmutter;
- Figur 8:: Teilschnitt durch einen Parallelgreifer mit federnd gelagerter Spindelmutter, wobei die Federkennlinie jeweils einen abgeknickten Verlauf aufweist;
- Figur 9:: Perspektivische Ansicht des Getriebestegs, motorseitig;
- Figur 10:: Perspektivische Ansicht des Getriebestegs, keilgetriebeseitig;
- Figur 11:: Perspektivische Ansicht des Getriebestegs und einer Spindelmutter;
- Figur 12:: Perspektivische Ansicht des Deckels des Parallelgreifers;
- Figur 13:: Perspektivische Ansicht der Schlitten, der Führungsabdichtungen und des Doppelkeils von oben;
- Figur 14:: Perspektivische Ansicht der Schlitten, der Führungsabdichtungen und des Doppelkeils von unten;
- Figur 15:: Teilquerschnitt durch die Führungsnutdichtung quer zur Richtung der Führungsnut, vergrößert;
- Figur 16:: Teilansicht durch die Führungsnutdichtung parallel zur Richtung der Führungsnut, vergrößert.

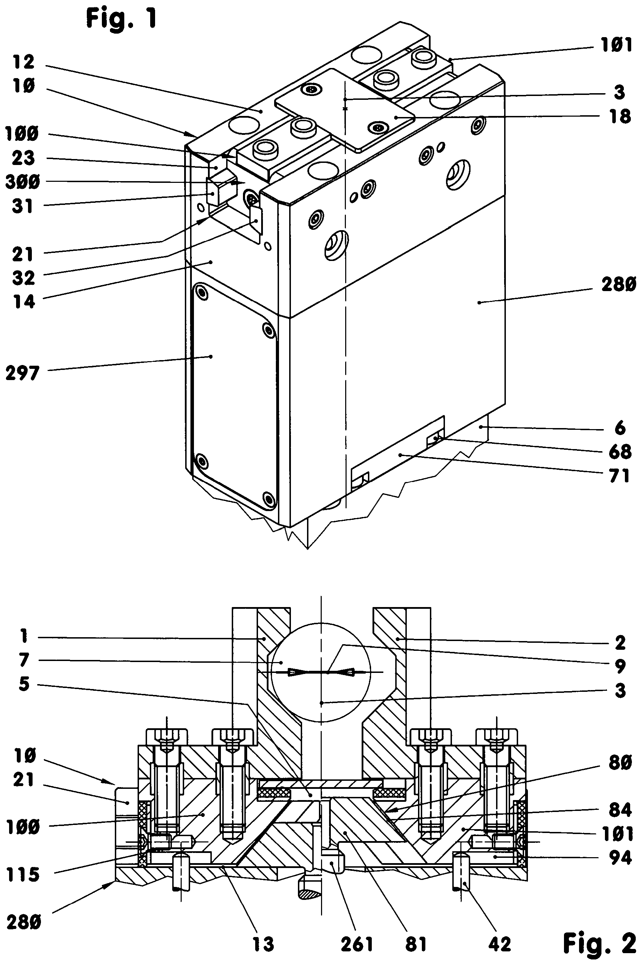

Die Figur 1 zeigt eine Parallelgreifvorrichtung mit zwei jeweils auf Schlitten (100, 101) sitzenden Greifbacken (1, 2). Die in ihrer Längsrichtung beweglichen Schlitten (100, 101) sind in einem Führungsgrundkörper (10) in einer Führungsnut (21) z.B. gleitgelagert geführt. Der die Führungsnut aufnehmende Führungsgrundkörper (10) bildet zusammen mit einem Antriebsgrundkörper (280) ein Gehäuse, wobei der Antriebsgrundkörper (280) einen aus einem Elektromotor mit z.B. zwei nachgeschalteten mechanischen Getrieben (230, 260) bestehenden Antrieb aufnimmt. Der Antrieb wirkt über ein Doppelschiebekeilgetriebe (80) auf die Schlitten (100, 101) des Führungsgrundkörpers (10). In Figur 1 ist die Greifvorrichtung über ihren Antriebsgrundkörper (280) auf einem sie tragenden Maschinen- bzw. Handhabungsgeräteteil (6) montiert.

Die Figur 2 stellt den oberen Teil der Parallelgreifvorrichtung im Längsschnitt mit zwei aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur Darstellung nach Figur 2 bewegen sich die Greifbacken (1, 2) getriebebedingt immer zwangsläufig synchron aufeinander zu oder voneinander weg.

Der z.B. im Wesentlichen quaderförmige Führungsgrundkörper (10) der Parallelgreifvorrichtung ist beispielsweise aus der Aluminiumlegierung AlMgSi1 gefertigt. Die Länge des Führungsgrundkörpers (10) ist z.B. fast doppelt so lang wie seine Breite und seine Höhe. Im Ausführungsbeispiel ist der Führungsgrundkörper (10) 76 mm lang. Bei dieser Baugröße beträgt der maximale Hub jedes Schlittens (100, 101) bzw. Greiferbackens (1, 2) z.B. 6,2 mm.

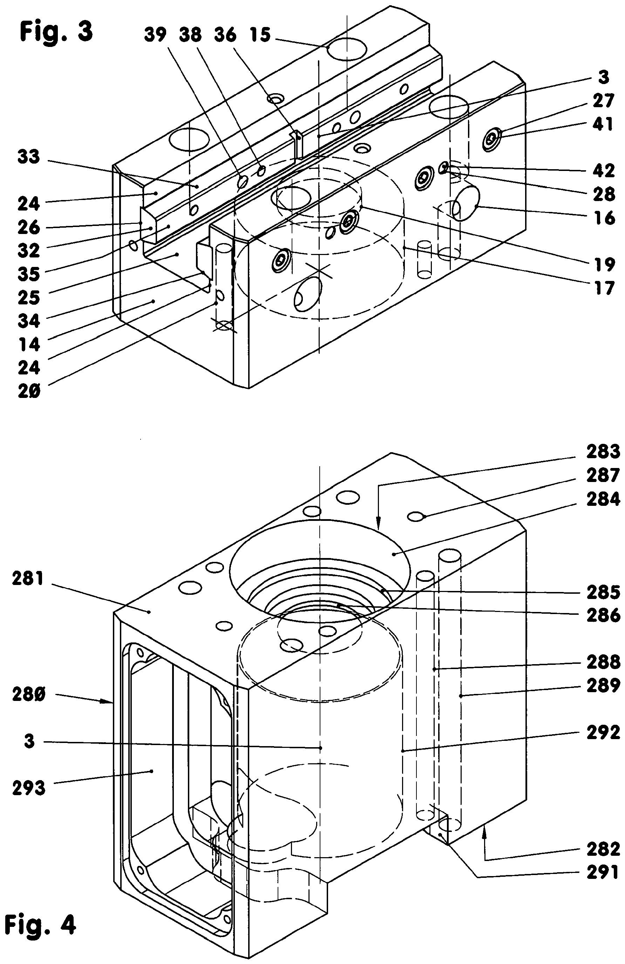

Der Führungsgrundkörper (10) nimmt zentral die nach oben - zu den Greifelementen (1, 2) hin - offene Führungsnut (21) auf, vgl. Figur 3, deren z.B. rechteckiger Querschnitt eine Breite von 17,5 mm und eine Höhe von 16 mm misst. In den planen Seitenwandungen (23, 24) der Führungsnut (21) ist jeweils eine flache, z.B. 0,75 mm tiefe und 7,5 mm breite Schienenführungsnut (26) zur späteren Aufnahme einer Führungsschiene (31, 32) eingearbeitet. Die einzelne Schienenführungsnut (26) hat einen rechteckigen Querschnitt, einen planen Grund und z.B. plane Seitenwandungen. Die Schienenführungsnuten (26) erstrecken sich über die gesamte Länge des Führungsgrundkörpers (10).

Jede Führungsschiene (31, 32) ist hier eine aus einem nichtrostenden Stahl, z.B. aus einem X90CrMoV18, gefertigte, im Wesentlichen trapezförmige Stange. Die Breite der sich z.B. über die Länge des Führungsgrundkörpers (10) erstreckenden Führungsschiene (31, 32) beträgt im Ausführungsbeispiel 7,5 mm. Die Höhe der Führungsschiene (31, 32) misst ca. 57% ihrer Breite. Aufgrund der hohen Festigkeit einer derartigen Führungsschiene (31, 32) können die Schlitten größere Momente auf den Führungsgrundkörper (10) übertragen. Demzufolge kann die Greifvorrichtung größere Greifkräfte auf das aufzunehmende Werkstück (7) ausüben.

Jede Führungsschiene (31, 32) hat einen sechseckigen Querschnitt und weist zwei einander spiegelsymmetrisch gegenüberliegende Tragflanken (33, 34) auf, die einen Winkel von 30 Winkelgraden einschließen. Die Spiegelebene halbiert die Führungsschiene (31, 32) entlang ihrer horizontalen Längsmittenebene. Die Tragflanken (33, 34) überdecken mindestens 75 % der Führungsschienenhöhe, wobei die Führungsschienenhöhe parallel zu den Mittellinien der die Führungsschiene (31, 32) positionierenden Passstifte (42) gemessen wird. Zwischen den Tragflanken (33, 34) und der dazwischen eingeschlossenen, zur vertikalen Mittenlängsebene (8) parallelen freien Fläche (35) befinden sich Kantenabrundungen, deren Radien jeweils 0,5 mm messen.

Mindestens eine der Führungsschienen (31, 32) weist mittig eine Quernut (36) auf mit der Breite von z.B. 2 mm und der Tiefe von z.B. 1,7 mm. Diese Quernut (36) dient der zusätzlichen verschleißfesten Führung des im Doppelschiebekeilgetriebe (80) verwendeten Doppelschiebekeils (81). Ggf. können die einzelnen Führungsschienen (31, 32) auch aus zwei oder mehreren hintereinander angeordneten Abschnitten aufgebaut sein.

Im Ausführungsbeispiel sind die Führungsschienen (31, 32) jeweils mit zwei Senkschrauben (41) am Führungsgrundkörper (10) befestigt, vgl. Figur 1 und 3. Vorab werden die Führungsschienen (31, 32) jeweils mit Hilfe von zwei Passstiften (42) am Führungsgrundkörper (10) positioniert. Die Passstifte sind jeweils im Bereich zwischen zwei Verschraubungen angeordnet. Die Bohrungen (39) für die Passstifte (42) und die Gewindebohrungen (38) liegen jeweils auf der horizontalen Mittenlängsebene der Führungsschienen (31, 32).

Um ein maximales Führungsspiel von weniger als 0,05 mm zwischen den Führungsschienen (31, 32) und den Schlitten (100, 101) zu erzielen, können die Führungsschienen nach dem Einbau in den Führungsgrundkörper (10) durch Hartmetallfräsen oder Überschleifen feinbearbeitet werden.

In der Unterseite (13) des Führungsgrundkörpers (10) befindet sich eine zentrale Stufenbohrung (17) mit einem Durchmesser von 32 mm bei einer Tiefe von 15 mm. Sie mündet über einen im Durchmesser kleineren koaxialen Bohrungsabschnitt (19) in die Führungsnut (21). Beidseits der Stufenbohrung (17) ist in der vertikalen Mittenlängsebene (8) jeweils eine Passstiftbohrung (20) eingearbeitet. In den langen Seitenwandungen des Führungsgrundkörpers (10) sind zwei Querdurchgangsbohrungen (16) mit Zylindersenkungen angeordnet. U.a. kann über sie die Vorrichtung z.B. an einem Handhabungsgerät (6) befestigt werden.

An der Unterseite (13) des Führungsgrundkörpers (10) ist der quaderförmige Antriebsgrundkörper (280) über die in den Passstiftbohrungen (287) sitzenden Passstifte (42) zentriert angeordnet. Der Antriebsgrundkörper (280) hat einen zumindest annähernd vergleichbaren horizontalen Querschnitt wie der Führungsgrundkörper (10).

Der Antriebsgrundkörper (280) weist eine zentrale durchgehende Stufenbohrung (283) auf, von der vier Stufen von dessen Oberseite (281) aus sichtbar sind. Die Mittellinie dieser - nach Figur 4 von oben eingearbeiteten - Stufenbohrung ist deckungsgleich zur Vorrichtungsmittellinie (3). Die erste Stufe ist die Hohlradsitzbohrung (284), in der ein ggf. mit 59 Zähnen ausgestattetes Hohlrad (231) ortsfest, z.B. eingepresst oder eingeklebt, sitzt. Die zweite Stufe ist die Lagerbohrung (285) für eine Axialanlaufscheibe (259). Die dritte und vierte Stufe stellt die Durchbruchsbohrung (286) dar. Beidseits der Stufenbohrung (283) ist in der vertikalen Mittenlängsebene (8) jeweils eine vertikale Passstiftbohrung (287) eingearbeitet. Nahe der Stufenbohrung (283) sind mit einer 90-Winkelgradteilung vier Durchgangsbohrungen (288) angeordnet, über die der Führungs- und der Antriebsgrundkörper (10, 280) mittels der Schrauben (68) verbunden werden. Neben jeder Durchgangsbohrung (288) befindet sich eine im Durchmesser größere vertikale Befestigungsbohrung (289), über die die Vorrichtung im Ausführungsbeispiel am Maschinenschlitten (6) befestigt ist, vgl. Figur 1. Bis auf zwei einander diagonal gegenüberliegenden Bohrungen sind alle anderen Befestigungsbohrungen (15, 16) mit den zu den jeweiligen Befestigungsschrauben passenden Senkungen ausgestattet. Die vertikalen Befestigungsbohrungen (289) setzen sich auch im Führungsgrundkörper (10) fort.

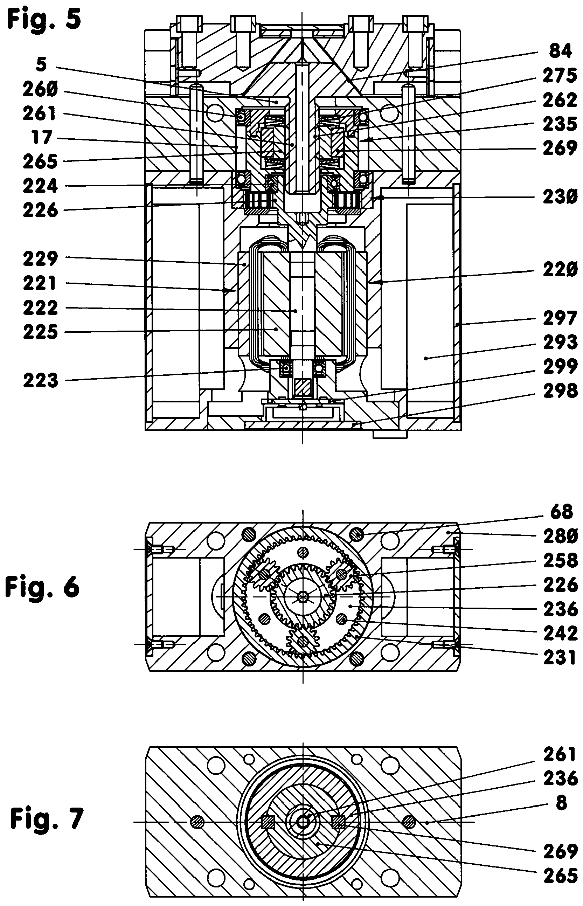

Die Unterseite (282) des Antriebsgrundkörpers (280) hat eine z.B. 7 mm tiefe, hier 12-eckige Deckelausnehmung (291). Sie ist in Figur 4 nur teilweise gestrichelt angedeutet. Die Deckelausnehmung erstreckt sich von der vorderen bis zur hinteren Längsseitenwandung des Antriebsgrundkörpers (280). Von der Deckelausnehmung (291) aus ragt eine z.B. 42 mm tiefe Hauptbohrung (292) in den Antriebsgrundkörper (280) in Richtung der Führungsnut (21) hinein, vgl. Figur 1. Die Hauptbohrung (292), in der der Stator (229) des z.B. bürstenlosen Elektromotors (221) eingesetzt ist, vgl. Figur 5, hat hier einen kreisrunden Querschnitt, dessen Durchmesser z.B. 40 % der Antriebsgrundkörpergesamtlänge entspricht. In sie (292) mündet von oben her die Durchbruchsbohrung (286).

Der Elektromotor (221) hat beispielsweise eine Nennleistung von 81 W und eine Nenndrehzahl von 9350 U/min. Das an seiner Rotorwelle (222) abgegebene Drehmoment beträgt 0,09 Nm.

In jede der beiden schmalen Seitenwandungen ist eine z.B. 19 mm tiefe Ausnehmung (293) zur Aufnahme von elektrischen oder elektronischen Baugruppen eingearbeitet. Die Ausnehmungen (293) münden im unteren Bereich des Antriebsgrundkörpers (280) in die Hauptbohrung (292). Jede der Ausnehmungen ist mit einem mit vier Senkschrauben am Antriebsgrundkörper befestigbaren rechteckigen Seitendeckel (297) verschließbar. Einer der Deckel (297) trägt eine - hier nicht dargestellte - elektrische Steckverbindung.

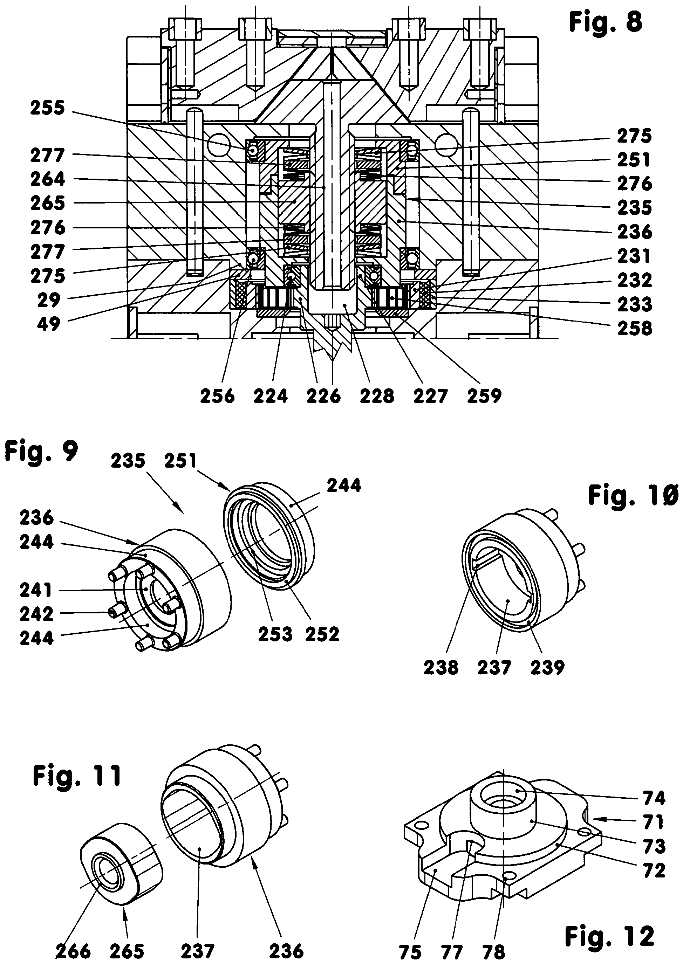

In der Unterseite (282) des Antriebsgehäuses (280) sitzt ein z.B. 12-eckiger Deckel (71), vgl. Figur 12. Der Deckel (71) hat einen zentralen zylindrischen Zentrierabsatz (72) mit dem er mit geringem Spiel in die Hauptbohrung (292) passt, vgl. Figur 4. Um den Zentrierabsatz (72) herum sind vier Befestigungsbohrungen (78) angeordnet, über die der Deckel (71) mit dem Führungsgrundkörper (10) unter Zwischenlage des Antriebsgrundkörpers (280), mit vier Zylinderschrauben (68), vgl. Figur 1, verschraubt wird. Zur Aufnahme der Schraubenköpfe der Zylinderschrauben (68) weist der Deckel (71) Senkungen oder Einfräsungen auf, die in den Bereich der Längsseitenwandungen reichen, vgl. Figuren 1 und 4.

Auf dem zylindrischen Zentrierabsatz (72) sitzt zentral ein zylindrischer Lagerbock (73), der zur Aufnahme eines die Rotorwelle (222) lagernden Wälzlagers (223) eine Lagerbohrung (74) aufweist. Nach Figur 12 verfügt der Deckel (71) über ein von der Seite aus eingefrästes Langloch (75), das in seinem Endbereich die gehäuseseitige Deckelseite mit der außenliegenden Deckelseite verbindet.

Der Deckel (71) besitzt in der Deckelaußenseite eine zentrale zweistufige Vertiefung (77), wobei die innere Stufe der Vertiefung (77), zumindest bereichsweise, eine zylindrische Wandung aufweist. Auf dem Grund der Vertiefung (77) ist eine Platine (299) mit einer Kombination aus einem Drehwinkelgeber und einem Drehzahlmesser montiert, vgl. Figur 5. Die äußere Stufe der Vertiefung hat parallel zur Unterseite (282) einen im Wesentlichen rechteckigen Querschnitt zur Aufnahme eines Kleindeckels (298).

In der Hauptbohrung (292) ist der Stator (229) des Elektromotors (221) angeordnet. Der Stator (229) ist dort z.B. verklemmt oder verklebt. Er umgibt den auf der Rotorwelle (222) drehfest sitzenden Rotor (225). Nach Figur 5 ist das untere Ende der Rotorwelle (222) mittels des Rillenkugellagers (223) über den Deckel (71) im Antriebsgrundkörper (280) gelagert. Das obere Ende der Rotorwelle (222) trägt ein z.B. angeformtes Sonnenrad (226) eines Planetengetriebes. An die mit z.B. 29 Zähnen ausgestattete Verzahnung des Sonnenrades (226) schließt sich im Bereich des freien Endes der Rotorwelle (222) ein zylindrischer Lagerzapfen (227) an. Der Lagerzapfen (227) und das Sonnenrad (226) weisen eine zentrale Bohrung (228) auf.

Auf dem Lagerzapfen (227) sitzt ein Wälzlager, z.B. das Dünnringlager (224), über das sich die Rotorwelle (222) am Steg (235) des Planetengetriebes abstützt. Der in Figur 9 abgebildete, z.B. zweiteilige Steg (235) hat primär die Form eines Rohres, das einen aufgebohrten Zwischenboden (241) aufweist. Die zylindrische Außenwandung des montierten Stegs (235) weist jeweils in der Nähe einer jeden Stirnseite außenseitig eine zylindrische Eindrehung (243) auf, die jeweils als Lagersitz für den Innenring z.B. eines Rillenkugellagers (255, 256) dient. Nach Figur 8 sitzt das obere Wälzlager (255) in der Stufenbohrung (17) des Führungsgrundkörpers (10).

Der Steg (235) besteht aus einer Stegglocke (236) und einem Stegdeckel (251), vgl. Figur 9. Die Stegglocke (236) trägt an ihrer unteren Stirnseite z.B. sechs Stegzapfen (242), vgl. auch Figur 6. Auf mindestens drei Stegzapfen (242) ist jeweils ein mit z.B. 14 Zähnen verzahntes Planetenrad (258) gleitgelagert. Die die Stegzapfen (242) tragende Stirnseite hat zwischen den Stegzapfen (242) eine kurze zylindrische Lagerbohrung (244), die kurz vor dem Stegzwischenboden (241) der Stegglocke (236) endet. Zwischen dem Stegzwischenboden (241) und der Lagerbohrung (244) befindet sich ein kleiner Absatz, um zu gewährleisten, dass der Innenring des in der Bohrung (244) sitzenden Dünnringlagers (224) nicht am Stegzwischenboden (241) anliegt.

Die Stegglocke (236) weist in der rückseitigen Stirnfläche eine zentrale profilierte Mitnahmebohrung (237) auf, vgl. Figur 10, die vor dem z.B. 0,5 mm dicken Zwischenboden (241) endet. Gemäß der Figuren 5 und 7 sind in die Mitnahmebohrung zur Aufnahme zweier Passfedern (269) zwei zur Mittellinie (3) parallele Nuten (238), die sich gegenüberliegen, eingestoßen.

Zudem weist diese Stirnseite, um die Mitnahmebohrung (237) herum, einen Ringkanal (239) auf, der einen rechteckigen Einzelquerschnitt hat.

In den Ringkanal (239) greift nach der Stegmontage ein an der unteren Stirnseite des Stegdeckels (251) angeformter Ringsteg (252) form- und ggf. auch kraftschlüssig ein. Der Stegdeckel (251) hat eine zentrale, durchgehende Stufenbohrung (253). Der Durchmesser der großen Stufe entspricht dem regulären Durchmesser der Mitnahmebohrung (237). Der Durchmesser der kleineren Stufe ist z.B. um 2 mm kleiner.

Im Hohlraum des Stegs (235) sitzt nach Figur 5 eine zwischen zwei Tellerfederpaketen gelagerte, parallel zur Mittellinie (3) geringfügig längsbewegliche Spindelmutter (265). Die Spindelmutter (265) liegt mit ihrer radialen Außenwandung an der Wandung der Mitnahmebohrung (237) an. Die Spindelmutter (265) trägt als Wellen-Naben-Verbindung in je einem Langloch eine Passfeder (269). Gemäß Figur 11 ist anstelle der Passfederverbindung eine Wellen-Naben-Verbindung mit einem Polygonalen Querschnittsprofil vorgesehen. Im Ausführungsbeispiel hat das Querschnittsprofil mindestens zwei Ecken.

Die an jeder Stirnseite der Spindelmutter (265) sitzende Tellerfedersäule besteht nach Figur 5 aus je zwei wechselsinnig angeordneten, außenzentrierten Tellerfedern (275). Anstelle der Tellerfedersäule können auch andere mechanische Federn, wie z.B. Schraubenfedern, Ringfedern, Gummifedern und dergleichen verwendet werden. Auch der Einsatz von pneumatischen Federn ist denkbar.

Nach Figur 8 werden zwei Tellerfedersäulen benutzt, die unterschiedliche Federraten aufweisen. Die der Spindelmutter (265) nahen Tellerfedern (276) sind hier je drei wechselseitig angeordnete dünne Tellerfedern (276) mit kleinen Federraten. Sie sitzen innenzentriert an einem an der Spindelmutter (265) pro Stirnseite angeformten Spindelmutterkragen (266). Letzterer hat auch die Aufgabe, die relativ weichen Tellerfedern (276), deren Federrate pro verwendete Federsäule kleiner ist als die Federrate der benachbarten, aus den Tellerfedern (275) zusammengesetzten Federsäulen, vor einer Überschreitung des größtzulässigen Federwegs zu schützen. An jeder Federsäule, die durch die dünnen Tellerfedern (276) gebildet ist, liegt eine Anschlagscheibe (277) an, an der sich wiederum eine außenliegende, vom Steg (235) umgriffene Federsäule abstützt. Diese Federsäule besteht aus zwei wechselseitig geschichteten Tellerfedern (275).

Die vorgespannten Federsäulen zentrieren die Spindelmutter (265) parallel zur Mittellinie (3) mittig im Steg (235). Verschiebt sich beim Betrieb der Greifvorrichtung die Spindelmutter (265) gegenüber dem Steg (235) in eine Richtung entlang der Mittellinie (3), so sitzt die Anschlagscheibe (277) ab einer bestimmten Gegenkraft auf den Stirnseiten des entsprechenden Spindelmutterkragens (266) auf, um ab dieser Gegenkraft die großen, härteren Tellerfedern (275) zu belasten. Auf diese Weise ergibt sich eine abgeknickte Federkennlinie, bei der die federbedingte Gegenkraft in einem ersten Hubabschnitt eine kleine Steigung und im zweiten Hubabschnitt eine große Steigung aufweist. Der Steigungswinkel der zweiten Steigung ist mindestens doppelt so groß wie der der ersten.

Selbstverständlich ist es auch möglich Federsäulen so zusammenzustellen, dass eine ein- oder mehrfach geknickte Kennlinie entsteht, ohne dass dazu eine Anschlagscheibe (277) in Verbindung mit einem Spindelmutterkragen (266) benutzt wird.

Gemäß Figur 8 ist das Hohlrad (231) zusätzlich in einem Elastomerkörper (232) gelagert. Dazu sitzt das Hohlrad (231) in einem Stützring (233), der das Hohlrad (231) mit Abstand in Radialrichtung umgibt. Zwischen dem Hohlrad (231) und dem konzentrisch angeordneten Stützring (233) ist als Elastomerkörper (232), z.B. ein Gummiring, einvulkanisiert oder in sonstiger Weise stoffschlüssig befestigt. Das Hohlrad (231) kann sich somit in dem im Antriebsgehäuse (280) drehfest angeordneten Stützring (233) um wenige Winkelgrade um die Mittellinie (3) verschwenken. Zugleich rutscht unter Gleitreibung das Hohlrad (231) in Axialrichtung auf dem planen Bodenabsatz der Hohlradsitzbohrung (284) entlang. Ggf. steht zur Sicherstellung der erforderlichen Reibung bei der noch nicht eingebauten Kombination aus Hohlrad (231), Elastomerkörper (232) und Stützring (233) die untere Stirnfläche des Hohlrads (231) nach unten über die untere Stirnfläche des Stützrings (233) über, so dass im eingebauten Zustand der Kombination das Hohlrad (231) unter der axial wirkenden Spannung des Elastomerkörpers (232) am planen Bodenabsatz der Hohlradsitzbohrung (284) anliegt. Auf diese Weise ist das Hohlrad (231) als Teil des Getriebes (230) im Antriebsgehäuse (280) schwingungsgedämpft gelagert.

Bei dieser Variante ragt der Führungsgrundkörper (10) mittels eines Zentrierstegs (29) in die Stufenbohrung (283) des Antriebsgrundkörpers (280) hinein. Der Zentriersteg (29) lagert zugleich das untere, den Steg (235) lagernde Wälzlager (256). Der Außenring des Wälzlagers (256) stützt sich über eine Abstützscheibe (49) und den Stützring (233) im Antriebsgrundkörper (280) ab.

Die Figur 11 zeigt eine Stegglocke (236), die eine im Querschnitt unrunde Mitnahmeausnehmung (237) aufweist. Die Fläche des Querschnitts besteht aus einem großen Kreis, dem zwei kleinere Kreise überlagert sind. Der große Kreis hat einen Durchmesser von z.B. 18,1 mm, während der Durchmesser der kleinen Kreise z.B. 10 mm beträgt. Die Mittelpunkte der Kreise liegen auf einer Geraden, wobei die kleinen Kreise einander tangential berühren. Der gemeinsame Berührpunkt der beiden kleinen Kreise liegt auf dem Mittelpunkt des großen Kreises. Zur Vermeidung einer unstetigen Außenkontur ist der große Kreis mit den kleinen Kreisen über vier gleich lange tangentiale Geraden verbunden, so dass die Querschnittsfläche ein sog. Zweier-Polygon darstellt. Die Montagefuge zwischen der Stegglocke (236) und dem Stegdeckel (251) ist hier eine einfache Zentrierung.

Die Spindelmutter (265) sitzt auf einem als Gewindespindel (261) ausgeführten Hubschlitten. Die Gewindespindel (261), die am Doppelschiebekeil (81) angeformt ist, hat ein Trapezgewinde DIN 103 TR 8 x 1,5. Auch ein 8 x 2-Trapezgewinde ist denkbar. Die Gewindespindel (261) weist eine Durchgangsbohrung auf, die auch den Doppelschiebekeil (81) durchquert.

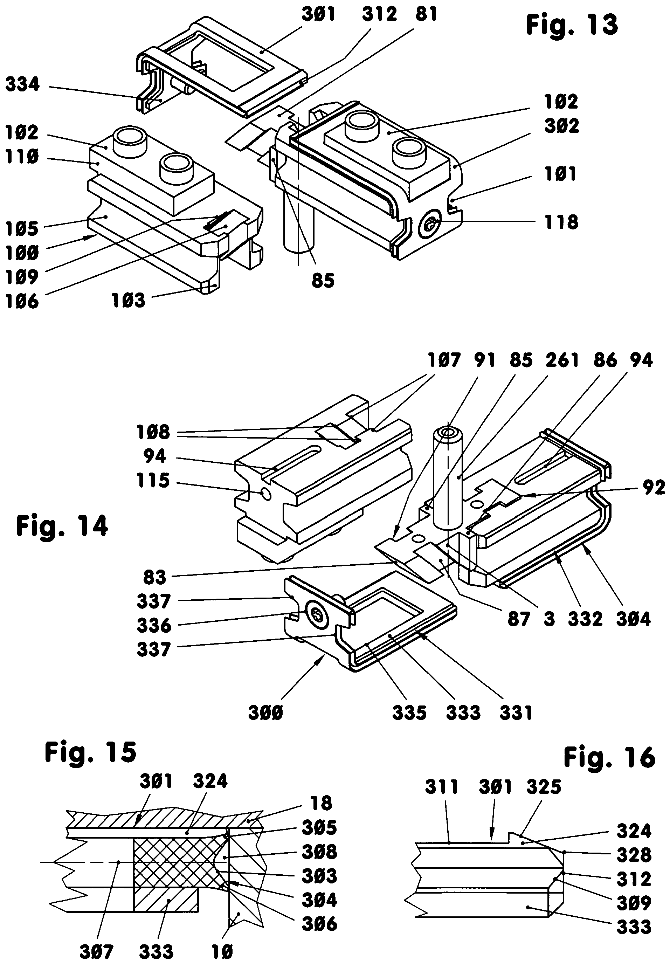

Der Doppelschiebekeil (81), der in der Führungsnut (21) als Teil eines Doppelschiebekeilgetriebes (80) angeordnet ist, ist im Wesentlichen ein vierkantstabartiges Bauteil mit quadratischem Querschnitt. In seinem mittleren Bereich ist beidseitig jeweils ein seitlich senkrecht abstehender Stützsteg (85, 86) angeformt, vgl. Figuren 13 und 14. Der Stützsteg (85, 86), der sich parallel zur Mittellinie (3) über die gesamte Doppelschiebekeilhöhe erstreckt, ist 2 mm breit. Er steht 2,4 mm über seine Quadergrundform über.

Der Doppelschiebekeil (81) weist an seinen stirnseitigen Enden jeweils eine im Schiebekeilwinkel abgeschrägte Stirnfläche (83, 84) auf. Der Schiebekeilwinkel liegt z.B. zwischen 20 und 50 Winkelgraden gegenüber der Greifrichtung (9). Im Ausführungsbeispiel beträgt er 50 Winkelgrade.

Parallel zu den abgeschrägten Stirnseiten (83, 84) befinden sich jeweils zwischen einer Stirnseite (83, 84) und einem Stützsteg (85, 86), pro Längsseite des Doppelschiebekeils (81), eine Keilnut (87), vgl. Figur 14. Die jeweilige Keilnut (87) ist parallel zu der nächstgelegenen Stirnseite (83, 84) orientiert. Sie hat dabei einen rechteckigen Querschnitt. Der Doppelschiebekeil (81) hat somit pro Längsseite zwei Keilnuten (87). Da er zur vertikalen Mittenlängsebene (8) symmetrisch aufgebaut ist, liegt jeder Keilnut (87) einer Längsseite eine zweite gegenüber. Auf diese Weise bildet jeder stirnseitige Bereich des Doppelschiebekeils (81) einen - im Querschnitt betrachtet - schräg angeordneten T-förmigen Keilsteg (91, 92).

Jeder Keilsteg (91, 92) des Doppelschiebekeils (81) greift formschlüssig in einen in der Führungsnut (21) gelagerten Schlitten (100, 101) ein. Jeder Schlitten ist primär ein quaderförmiger Körper, in den beidseitig Schlittenführungsnuten (105) eingearbeitet sind, mit der der einzelne Schlitten (100, 101) auf den Führungsschienen (31, 32) gleitgelagert ist.

Der einzelne Schlitten (100, 101), dessen Breite z.B. 0,2 mm kleiner ist als die Breite der Führungsnut (21), hat in der dem Doppelschiebekeil (81) zugewandten Stirnfläche (103) eine schräg angeordnete T-Nut (106), mit der der Schlitten (100, 101) den Keilsteg (91, 92) des Doppelschiebekeils (81) mit einem unter 0,1 mm liegenden Spiel umgreift. Nach den Figuren 13 und 14 sind in den Grund der T-Nut (106) mit Schmiermittel befüllbare Schmiertaschen (109) eingearbeitet. Auf der dem Doppelschiebekeil (81) abgewandten Stirnfläche weist der einzelne Schlitten (100, 101) eine Gewindebohrung (115) auf, deren Mittellinie auf der Mittenlängsebene (8) liegt. Über diese Gewindebohrung (115) kann die Führungsnutdichtung (300) befestigt werden.

Auf der Oberseite jedes Schlittens (100, 101) befindet sich ein z.B. quaderförmiger, z.B. 3,4 mm hoher Adapteraufsatz (110), der bei montiertem Schlitten (100, 101) oben z.B. 1,5 mm - über die Gehäuseoberseite (12) überstehend - aus der Führungsnut (21) herausragt. Zugleich steht der Adapteraufsatz (110) über die jeweils außenliegende, der T-Nut (106) abgewandten Stirnseite, um z.B. 1,8 mm über. Die ebene Oberseite (102) des Adapteraufsatzes (110) hat zwei mit Zylindersenkungen ausgestattete Gewindebohrungen, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten (100, 101). Ggf. sind dort die Greifbacken (1, 2) auch direkt angeformt oder unlösbar fixiert.

In die Oberseite eines jeden Schlittens (100, 101) ist ein Anschlaglangloch (94) eingearbeitet, Figuren 14 und 2. Nach Figur 2 ragt in das Anschlaglangloch (94) der Passstift (42) hinein. Bei dem Auseinanderfahren der Schlitten (100, 101) legt sich das innere Ende des Anschlaglanglochs (94) am Passstift (42) an, vgl. Figur 2, rechte Seite, um den Schlittenhub zu begrenzen.

Die Schlitten (100, 101) sind in der Führungsnut (21), vgl. Figur 2, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (21) ist mit einer z.B. rechteckigen Abdeckplatte (18) verschlossen. Die Abdeckplatte (18) ist so breit ausgelegt, dass die beiden Schlitten (100, 101), in Schließstellung der Greiferbacken (1, 2), diese gerade noch nicht berühren.

Um das Gehäuseinnere (5) und die Führungsschienen (31, 32) vor Schmutz oder sonstigen verschleißfördernden Verunreinigungen zu schützen, werden nach den Figuren 13 und 14 auf den Schlitten (100, 101) winkelförmige Führungsnutdichtungen (300) aufgesetzt und festgeschraubt. Dabei umgibt die einzelne Führungsnutdichtung (300) im Ausführungsbeispiel den Adapteraufsatz (110) des jeweiligen Schlittens (100, 101).

Die einzelne Führungsnutdichtung (300) besteht im Wesentlichen aus zwei Teilen pro Schlitten (100, 101), dem Dichtungsträger (331, 332) und dem Dichtungskörper (301, 302). Der Dichtungsträger (331, 332) ist ein aus einem rostfreien Stahl gestanzter Blechwinkel, der einen langen Schenkel (333) und einen kurzen Schenkel (334) hat. Der Blechwinkel ist schmäler als die Nutbreite der abzudichtenden Führungsnut (21).

Der lange Schenkel (333) hat eine rechteckige Positionierausnehmung (335), mit der er im montierten Zustand die Greifbackenmontagebasis des jeweiligen Schlittens (100, 101) umgibt. Der kurze Schenkel (334) besitzt ca. mittig eine Montagebohrung (336) und seitlich jeweils eine Nut (337). Die Montagebohrung dient der Durchführung der die Führungsnutdichtung (300) am Schlitten haltenden Schraube (118). Jede Nut (337) umgibt mit Spiel eine Führungsschiene (31, 32).

Auf jeden Dichtungsträger (331, 332) ist der über diesen ringsherum geringfügig überstehende Dichtungskörper (301, 302) befestigt angeordnet. Der elastische Dichtungskörper (301, 302) dichtet das von der Führungsnut (21) umschlossene Gehäuseinnere (5) entlang der Führungsgrundkörperoberseite (12) und entlang der Stirnseite (14) zur Umgebung hin ab.

An den Führungsnutwandungen (23-25) liegt der einzelne Dichtungskörper (301, 302) mit einem doppellippigen Profil (303) an. Das Profil (303) hat eine obere, äußere Lippe (305), die als erste Barriere gegen von außen eindringenden Schmutz in Form von Staub und/oder Feuchtigkeit dient. Durch die werkstoffeigene Spannkraft wird die Lippe (305) nach dem Einbau geringfügig nach oben gedrängt. Eine bezüglich Größe und geometrischen Abmessungen vergleichbare Lippe (306) ist zum Gehäuseinnenraum (5) hin geneigt. Sie hat u.a. die Aufgabe, das Schmiermittel des Doppelschiebekeilgetriebes (80) im Gehäuseinnenraum (5) zurückzuhalten. Die Lippe (306) ist zumindest nahezu symmetrisch zur oberen, äußeren Lippe (305) ausgeführt, wobei die in Figur 10 eingezeichnete Achse (307) als Symmetrielinie dient.

Dabei schließen die beiden Dichtlippen (305, 306) einen kanalartigen, z.B. mindestens 0,25 mm tiefen Hohlraum (308) ein, der an der inneren Stirnseite (312) mit einer v-förmigen Öffnung (309) endet. Entlang der inneren Stirnseite (312) weist die Außenseite (311) des Dichtungskörpers (301, 302) eine dritte Dichtlippe (324) auf, die bei einem Verfahren der Schlitten (100, 101) an der Unterseite der Gehäuseabdeckung (18) entlanggleitet. Die Dichtlippe (324), vgl. Figur 16, hat die Form eines Keils, dessen Vorderkante (328) in Richtung der Grundkörpermittellinie (3) weist.

Der Dichtungskörper (301, 302) ist als Kautschukwerkstoff im Ausführungsbeispiel am Dichtungsträger anvulkanisiert. Er kann aber auch als separates Bauteil hergestellt sein, das abschließend auf den Dichtungsträger (331, 332) aufgeklebt wird.

Beim Löse- und/oder Greifhub bewegen sich die Dichtungskörper (301, 302) zusammen mit den Dichtungsträgern (331, 332) und den Schlitten (100, 101) innerhalb der Führungsnut (21) hin und/oder her. Beim Greifhub wirkt die innere Dichtlippe (306) als ein das Schmiermittel vor sich herschiebender Abstreifer. Beim Lösehub übernimmt die äußere Dichtlippe (305) die Aufgabe des die Führungsschiene (31, 32) und die Führungsnut (21) reinigenden Abstreifers.

Für die Schließ- bzw. Greifbewegung wird der Hubschlitten (261), vgl. Figur 5, der sich zusammen mit dem Doppelschiebekeil (81) in seiner oberen Endlage befindet, mittels des aus den Getrieben (230, 260) und dem Elektromotor (221) bestehenden Antriebs (220) aus dieser Position heraus nach unten bewegt. Dazu wird der Elektromotor (221) bestromt. In der Folge treibt das mit der Rotorwelle (222) verbundene rechtsdrehende Sonnenrad (226) die Planetenräder (258) an. Diese wiederum stützen sich am ortsfesten Hohlrad (231) ab, wodurch zwangsläufig der Steg (235) um die Mittellinie (3) rotiert. Der Steg (235) nimmt die in ihm drehfest gelagerte Spindelmutter (265) des zweiten Getriebes (260) mit, um so die Spindel (261) in eine Hubbewegung zu versetzen. Der sich damit nach unten bewegende Doppelschiebekeil (81) zieht die Schlitten (100, 101) in der Führungsnut (21) nach innen zur Mitte hin. Hierbei taucht der Hubschlitten (261) in die Bohrung (228) der Rotorwelle (222) ein, ohne diese zu kontaktieren.

Der Doppelschiebekeil (81) wird über seine Stützstege (85, 86) zusätzlich in den Quernuten (36) der Führungsschienen (31, 32) geführt. Dazu liegen die Stützstege (85, 86) mit einem Spiel, das kleiner ist als 0,05 mm, an den Seitenflanken der Quernuten (36) an. Die Stirnflächen der Stützstege (85, 86) kontaktieren den jeweiligen Nutgrund der Quernuten (36) nicht.

Bei der Schließbewegung kommen die Keilflächen (108) am Doppelschiebekeil (81) zur Anlage. Sobald sich die Greifbacken (1, 2) am Werkstück (7) angelegt haben, steigt die Last des Elektromotors sprunghaft an, was die elektronische Motorsteuerung zum Abschalten der Motorbestromung veranlasst. Aufgrund der Massenträgheit des Rotors (225) dreht sich die Rotorwelle (222) noch mehrere Winkelgrade weiter. Um dadurch die Belastung der Schlittenführungen und die Klemmkraft der Greifelemente (1, 2) nicht unnötig zu erhöhen, wird - durch das Nachobenwandern der Spindelmutter (265) - die Verspannung der oberen im Steg (235) angeordneten Federsäule vergrößert, ohne die Schlitten (100, 101) merklich weiter zu verschieben.

Eine klemmkraftbedingte rückdrehende Wirkung entfällt im zweiten Getriebe (260), da das Schraubradgetriebe bei der gewählten Spindelsteigung selbsthemmend ausgelegt ist. Der Gesamthub eines Greifelementes dauert bei einer Gesamtübersetzung von 1:6,5 weniger als 75 Millisekunden.

Alternativ wird der Elektromotor (221) pro Greifbewegung stufenweise bestromt. Für das Anlegen der Greifelemente (1,2) an das Werkstück (7) wird bis zum Abschalten durch die Motorstromüberwachung der Elektromotor (221) nur mit 40 bis 80% der Nennleistung bestromt. Nach oder während der Stromabschaltung wird durch die im Gehäuse (10, 280) untergebrachte Elektronik der Elektromotor (221) zeitgesteuert für 10 bis 15 Millisekunden mit der doppelten, ggf. sogar der dreifachen Leistung bestromt, um ein kurzzeitiges Nachdrücken der Greifelemente (1, 2) zu bewirken.

Zum Lösen des Werkstückes (7) wird der Elektromotor (221) so bestromt, dass er sich z.B. linksdrehend in Bewegung setzt. Über die beiden Getriebe (230, 260) nach oben geschoben, drückt der Doppelschiebekeil (81) - unter Anlage an die Keilflächen (107) - die Schlitten (100, 101) bzw. die Greifbacken (1, 2) solange auseinander, bis die Enden der Anschlaglanglöcher (94) an den Passstiften (42) zur Anlage kommen. Das Stromlosschalten des Elektromotors (221) erfolgt in der gleichen Weise wie beim Greifen. Hier allerdings verschiebt sich die Spindelmutter (265) im Steg (235) nach unten.

### Bezugszeichenliste:

- 1, 2: Greifelemente, Greifbacken
- 3: Mittellinie zu (10, 280, 221)
- 5: Gehäuseinnenraum, Gehäuseinneres
- 6: Maschinenschlitten, Maschinenteil, Handhabungsgeräteteil
- 7: Werkstück
- 8: vertikale Mittenlängsebene
- 9: Greifrichtung

- 10: Führungsgrundkörper, Gehäuse
- 12: Grundkörperoberseite
- 13: Grundkörperunterseite
- 14: Grundkörperstirnseite
- 15: Befestigungsbohrungen, vertikal
- 16: Querdurchgangsbohrungen
- 17: Stufenbohrung
- 18: Gehäuseabdeckung, Abdeckplatte
- 19: Bohrungsabschnitt
- 20: Passstiftbohrung, vertikal

- 21: Führungsnut
- 23, 24: Seitenwandungen, Führungsnutwandungen
- 25: Nutgrund, Führungsnutwandungen
- 26: Schienenführungsnut
- 27: Senkbohrung für Schrauben (41)
- 28: Passstiftbohrungen, horizontal
- 29: Zentriersteg

- 31, 32: Führungsschiene, Schlittenführungsschiene
- 33, 34,: Tragflanken
- 35: Fläche zwischen (33) und (34)
- 36: Quernut
- 38: Gewindebohrungen
- 39: Passstiftbohrungen

- 41: Senkschrauben
- 42: Passstifte
- 49: Abstützscheibe
- 68: Zylinderschrauben für (10, 280, 71)

- 71: Deckel
- 72: Zentrierabsatz
- 73: Lagerbock
- 74: Lagerbohrung
- 75: Langloch
- 77: Vertiefung, zweistufig
- 78: Befestigungsbohrungen

- 80: Doppelschiebekeilgetriebe
- 81: Doppelschiebekeilelement, Doppelschiebekeil, Getriebebauteil
- 83, 84: Stirnseiten, Stirnflächen, schräg
- 85, 86: Stützstege
- 87: Keilnut
- 91, 92: Keilsteg, T-förmig
- 94: Anschlaglangloch

- 100, 101: Schlitten
- 102: Oberseite
- 103: Stirnseite, Stirnfläche
- 105: Schlittenführungsnuten
- 106: T-Nut
- 107: Keilflächen, Öffnungsanlage
- 108: Keilflächen, Schließanlage
- 109: Schmiertaschen

- 110: Adapteraufsatz
- 115: Gewindebohrung für (300)
- 118: Schraube für (300)

- 220: Antrieb
- 221: Elektromotor, bürstenlos
- 222: Rotorwelle, Welle
- 223: Wälzlager, Rillenkugellager, unten
- 224: Wälzlager, Dünnringlager, oben
- 225: Rotor, Magnetkörper
- 226: Sonnenrad, verzahntes Bauteil, Abtriebsglied Getriebeteil
- 227: Lagerzapfen
- 228: Bohrung in (226, 227)
- 229: Stator mit Wicklung

- 230: Planetengetriebe, erstes Getriebe
- 231: Hohlrad, verzahntes Bauteil, Getriebeteil
- 232: Elastomerkörper, Schwingungsdämpfer
- 233: Stützring

- 235: Steg, Getriebeteil
- 236: Stegglocke
- 237: Mitnahmebohrung, Mitnahmeausnehmung
- 238: Nuten
- 239: Ringkanal
- 241: Stegzwischenboden
- 242: Stegzapfen
- 243: Eindrehungen, Lagersitze
- 244: Lagerbohrung

- 251: Stegdeckel
- 252: Ringsteg
- 253: Stufenbohrung
- 255, 256: Wälzlager, Rillenkugellager; oben, unten
- 258: Planetenräder, verzahntes Bauteil, Getriebeteil
- 259: Axialanlaufscheibe für Planeten

- 260: Schraubgetriebe, zweites Getriebe
- 261: Hubschlitten, Spindel, Getriebeglied
- 262: Spindelgewinde, Getriebeglied
- 264: Bohrung
- 265: Spindelmutter
- 266: Spindelmutterkragen
- 269: Passfedern

- 275: Tellerfedern, dick, groß
- 276: Tellerfedern, dünn, klein
- 277: Anschlagscheibe

- 280: Antriebsgrundkörper, Gehäuse
- 281: Oberseite
- 282: Unterseite
- 283: Stufenbohrung, oben
- 284: Hohlradsitzbohrung
- 285: Lagerbohrung
- 286: Durchbruchsbohrung
- 287: Passstiftbohrungen
- 288: Durchgangsbohrungen für Verschraubung
- 289: Befestigungsbohrungen

- 291: Deckelausnehmung
- 292: Hauptbohrung
- 293: Ausnehmungen, seitlich

- 297: Seitendeckel
- 298: Kleindeckel
- 299: Platine mit Drehwinkelgeber

- 300: Führungsnutdichtung
- 301, 302: Dichtungskörper, Elastomerkörper
- 303: Profil, seitlich
- 304: Doppellippe
- 305: Lippe, außen, Dichtlippe
- 306: Lippe, innen, Dichtlippe
- 307: Symmetrieachse, Mittellinie
- 308: Hohlraum, kanalartig
- 309: Öffnung
- 311: Außenseite
- 312: Stirnseite

- 324: Dichtlippe, Einfachlippe
- 325: Dichtflanke
- 328: Vorderkante

- 331, 332: Dichtungsträger, Blechwinkel
- 333: Schenkel, lang
- 334: Schenkel, kurz
- 335: Positionierausnehmung
- 336: Montagebohrung
- 337: Nuten

## Patentansprüche

1. Antriebsvorrichtung für eine Greifelemente (1, 2) aufweisende Greifvorrichtung, bei der in einem Gehäuse (10, 280) mindestens ein Elektromotor (221) und mehrere Getriebe angeordnet sind, wobei das Abtriebsglied des Elektromotors (221) auf einen die Greifelemente (1, 2) anlenkenden Hubschlitten (261) wirkt, wobei die Mittellinie des Elektromotors (221) parallel oder koaxial zur Mittellinie (3) des Hubschlittens (261) orientiert ist und wobei zwischen den Greifelementen (1, 2) und dem Abtriebsglied (222) des Elektromotors (221) mindestens ein Federelement (275, 276) angeordnet ist, wobei
- zwischen dem Elektromotor (221) und den Greifelementen (1, 2) mindestens drei Getriebe (80, 230, 260) angeordnet sind,
- ein erstes Getriebe (230) ein ein- oder mehrstufiges Rädergetriebe mit gerad- oder schägverzahnten Rädern (226, 231, 258) ist,
- das Rädergetriebe (230) ein Planetengetriebe (230) ist, bei dem das Sonnenrad (226) auf der Welle (222) des Elektromotors (221) sitzt, der Steg (235) die Spindelmutter (265) lagert und das Hohlrad (231) ortsfest im die Getriebe (230, 260) zumindest teilweise umgebenden Gehäuse (10, 280) sitzt,
- ein zweites Getriebe (260) ein Schraubgetriebe ist, dessen angetriebenes Getriebeglied eine Spindelmutter oder eine Gewindespindel ist und dessen abtreibendes Getriebeglied der Hubschlitten (261) ist,
- zwischen dem Abtriebsglied (222) des Elektromotors (221) und dem Hubschlitten (261) mindestens ein elastisch abgefedertes Bauteil angeordnet ist, das bei einem Weiterdrehen mindestens eines Getriebeteils (226, 235) nach dem Abschalten des Elektromotors (221) den dadurch erzeugten Hub aufbraucht.

2. Antriebsvorrichtung gemäß Anspruch 1, **dadurch gekennzeichnet, dass** das Abtriebsglied eine Spindelmutter (265) ist, die auf eine am Hubschlitten (261) angeordnete Spindelgewinde (262) wirkt.

3. Antriebsvorrichtung gemäß Anspruch 1, **dadurch gekennzeichnet, dass** das Schraubgetriebe (260) pro Umdrehung einen Hub von 1,5 oder 2 mm erzeugt.

4. Antriebsvorrichtung gemäß Anspruch 1, **dadurch gekennzeichnet, dass** das Planetengetriebe (230) eine Übersetzung ins Langsame hat, die gleich oder kleiner ist als eins zu drei.

5. Antriebsvorrichtung gemäß Anspruch 1, **dadurch gekennzeichnet, dass** die Spindelmutter (265) im Steg (235) parallel zur Mittellinie (3) des Hubschlittens (261) längsverschiebbar zwischen zwei Federsystemen eingespannt ist.

6. Antriebsvorrichtung gemäß Anspruch 5, **dadurch gekennzeichnet, dass** jedes Federsystem mindestens ein mechanisches Federelement (275, 276) umfasst.

7. Antriebsvorrichtung gemäß Anspruch 1, **dadurch gekennzeichnet, dass** der Steg (325) im Gehäuse (10, 280) wälzgelagert ist.

8. Antriebsvorrichtung gemäß Anspruch 1, **dadurch gekennzeichnet, dass** die Welle (222) des Elektromotors (221) im Gehäuse (10, 280) und im Steg (235) wälzgelagert angeordnet ist.

9. Antriebsvorrichtung gemäß Anspruch 1, **dadurch gekennzeichnet, dass** mindestens eine Getriebeteil (231) des Getriebes (230) schwingungsdämpfend gelagert ist.

## Claims

1. Drive apparatus for a gripping assembly having gripper elements (1, 2), the gripping assembly comprising in a housing (10, 280) at least one electric motor (221) and a plurality of transmission means, with the output member of the electric motor (221) acting upon a lifting slide (261) to which gripper elements (1, 2) are articulated, with the center line of the electric motor (221) being oriented in parallel or coaxial with the center line (3) of the lifting slide (261) and with at least one spring element (275, 276) disposed between the gripper elements (1, 2) and the output member (222) of the electric motor (221), wherein
- at least three transmission means (80, 230, 260) are provided between the electric motor (221) and the gripper elements (1, 2),
- a first transmission (230) is a single- or multi-stage gear transmission comprising spur or spiral gear wheels (226, 231, 258),
- the transmission (230) is a planetary gear transmission (230) in which the sun wheel (226) is seated on the shaft (222) of the electric motor (221), the web (235) mounts the spindle nut (265) and the hollow wheel (231) is seated to be stationary inside the housing (10, 280), which housing at least partially surrounds the transmissions (230, 260),
- a second transmission (260) is a helical transmission of which the input member is a spindle nut or a threaded spindle, with the output member being the lifting slide (261), and
- at least one spring-action member is arranged between the output member (222) of the electric motor (221) and the lifting slide (261) to take up the stroke generated by the continued rotation of at least one transmission member (226, 235) which remains when the electric motor (221) is deactivated.

2. Drive apparatus as claimed in claim 1, **characterized in that** the output member is a spindle nut (265) which acts upon a spindle thread (262) disposed on the lifting slide (261).

3. Drive apparatus as claimed in claim 1, **characterized in that** the helical transmission (260) generates a stroke of 1.5 mm or 2 mm per revolution.

4. Drive apparatus as claimed in claim 1, **characterized in that** the planetary transmission (230) produces a multiplication towards decay equal to or lower than one to three.

5. Drive apparatus as claimed in claim 1, **characterized in that** the spindle nut (265) is clamped in the web (235) in a direction parallel to the center line (3) of the lifting slide (261) for longitudinal movement between two spring systems.

6. Drive apparatus as claimed in claim 5, **characterized in that** each spring system comprises at least one mechanical spring element (275, 276).

7. Drive apparatus as clamed in claim 1, **characterized in that** the web (325) is mounted in housing (10, 280) for rolling movement.

8. Drive apparatus as claimed in claim 1, **characterized in that** the shaft (222) of electric motor (221) is mounted for rolling movement in the housing (10, 280) and in the web (235).

9. Drive apparatus as claimed in claim 1, **characterized in that** at least one member (231) of the transmission (230) is mounted in a vibration-damping manner.

## Revendications

1. Dispositif d'entraînement pour un dispositif de préhension comportant des éléments de préhension (1, 2), au moins un moteur électrique (221) et plusieurs systèmes de transmission logés dans un carter (10, 280), l'élément de sortie du moteur électrique (221) agissant sur un chariot de levage (261) articulant les éléments de préhension, la ligne médiane du moteur électrique (221) étant orientée parallèlement ou coaxialement par rapport à la ligne médiane (3) du chariot de levage (261) et au moins un élément à ressort (275, 276) étant disposé entre les éléments de préhension (1, 2) et l'élément de sortie (222) du moteur électrique (221),
- au moins trois systèmes de transmission (80, 230, 260) étant disposés entre le moteur électrique (221) et les éléments de préhension (1, 2),
- un premier système de transmission (230) étant un train d'engrenages (230) à un ou plusieurs rapports avec des roues dentées à denture droite ou oblique (226, 231, 258),
- le train d'engrenages (230) [...]étant exécuté comme engrenage planétaire (230) ayant le planétaire (226) monté sur l'arbre (222) du moteur électrique (221), le porte-satellites (235) logeant l'écrou à broche (265) et la couronne (231) étant montée de façon fixe dans le carter (10, 280) qui entoure au moins partiellement les engrenages (230, 260),
- un deuxième système de transmission (260) étant un engrenage hélicoïdal dont l'élément de transmission entraîné est un écrou à broche ou une broche filetée et dont l'élément de sortie est le chariot de levage (261),
- au moins un composant amorti élastiquement étant disposé entre l'élément de sortie (222) du moteur électrique (221) et le chariot de levage (261) qui amortit la course produite par la poursuite de la rotation d'au moins un élément d'engrenage (226, 235), lorsque le moteur électrique (221) est arrêté.

2. Dispositif d'entraînement selon la revendication 1, **caractérisé en ce que** l'élément de sortie est un écrou à broche (265) qui agit sur un filetage de broche (262) disposé sur le chariot de levage (261).

3. Dispositif d'entraînement selon la revendication 1, **caractérisé en ce que** la transmission hélicoïdale (260) produit une course de 1,5 ou 2 mm par rotation.

4. Dispositif d'entraînement selon la revendication 1, **caractérisé en ce que** l'engrenage planétaire (230) est un engrenage à réducteur de vitesse avec un rapport de réduction égal ou inférieur à 1/3.

5. Dispositif d'entraînement selon la revendication 1, **caractérisé en ce que** l'écrou à broche (265) dans le porte-satellite (235) est serré entre deux systèmes à ressort parallèlement à la ligne médiane (3) de façon à pouvoir coulisser longitudinalement.

6. Dispositif d'entraînement selon la revendication 5, **caractérisé en ce que** chaque système à ressort comporte au moins un élément à ressort mécanique (275, 276).

7. Dispositif d'entraînement selon la revendication 1, **caractérisé en ce que** le porte-satellites (235) dans le carter (10, 280) est monté sur des roulements.

8. Dispositif d'entraînement selon la revendication 1, **caractérisé en ce que** l'arbre (222) du moteur électrique (221) dans le carter (10, 280) et dans le porte-satellites (235) est monté sur des roulements.

9. Dispositif d'entraînement selon la revendication 1, **caractérisé en ce qu'**au moins un élément (231) de la transmission (230) est logé de façon antivibratoire.
